# EUROPÄISCHE PATENTANMELDUNG

(11) **EP 2 695 725 A1**
(43) Veröffentlichungstag der Anmeldung: **12.02.2014**
(21) Anmeldenummer: 12179982.9
(22) Anmeldetag: 10.08.2012
(51) Int. Cl.: B29C 67/00, B22F 3/105

(54) **Elektrostatische Pulveraufbringung bei einem generativem Herstellungsverfahren und Vorrichtung hierfür**

(71) Anmelder: MTU Aero Engines AG, 80995 München (DE)
(72) Erfinder: Stiehler, Frank, 04924 Bad Liebenwerda (DE); Heß, Thomas, 81541 München (DE)

(57) **Zusammenfassung**

Die vorliegende Erfindung betrifft ein Verfahren zur generativen Herstellung eines dreidimensionalen Körpers, der aus Pulver aufgebaut wird, wobei zunächst ein Substrat (10) und/oder ein bereits existierender Teilkörper (1) des herzustellenden Körpers bereitgestellt wird und wobei zur Herstellung einer dreidimensionalen Geometrie jeweils einzelne Pulverschichten (2) entlang und gemäß der Kontur eines Schnitts durch den herzustellenden Körper auf dem Substrat und/oder dem Teilkörper aufgebracht werden und wobei die Pulverschichten jeweils zumindest teilweise mit dem bereits existierenden Teilkörper verbunden werden und/oder das Pulver innerhalb der Pulverschichten untereinander gefügt wird, indem die Pulverschichten durch Strahlungsenergie (3) aufgeschmolzen und/oder gesintert werden, wobei das Pulver elektrostatisch auf den Teilkörper und/oder das Substrat aufgebracht wird. Außerdem betrifft die vorliegende Erfindung eine entsprechende Vorrichtung zur Durchführung des Verfahrens.

## Beschreibung

### HINTERGRUND DER ERFINDUNG

### GEBIET DER ERFINDUNG

Die vorliegende Erfindung betrifft ein Verfahren zur generativen Herstellung eines dreidimensionalen Körpers, der aus Pulver aufgebaut wird. Darüber hinaus betrifft die Erfindung eine Vorrichtung zur Durchführung eines entsprechenden Verfahrens.

### STAND DER TECHNIK

Aus dem Stand der Technik sind sogenannte Rapid Prototyping - or Rapid Manufacturing - Verfahren, also Verfahren zur schnellen Herstellung von Prototypen oder zur schnellen Herstellung von Bauteilen, bekannt, die sogenannte generative Herstellverfahren nutzen. Dabei werden durch selektives Sintern von Pulver, beispielsweise mittels Laser- oder Elektronenstrahlen, die über schichtweise angeordnetes Pulver geführt werden, dreidimensionale Strukturen erzeugt. Derartige Verfahren sind für eine Vielzahl von Materialien und für unterschiedlichste Bauteile, insbesondere auch Flugturbinenbauteile vorgeschlagen worden. Beispiele hierfür sind in der DE 103 19 494 A1, DE 10 2006 049 216 A1, DE 10 2004 057 865 A1, DE 10 2008 027 315 A1 und DE 109 03 436 C2 genannt.

Bei bekannten generativen Herstellungsverfahren bestehen jedoch Probleme bei der Herstellung von Körpern mit Hohlräumen oder Hinterschneidungen, da beispielsweise Überhänge bei Hinterschneidungen zu Instabilitäten des bereits erzeugten Bauteils führen können. Außerdem sind bei Pulverbettverfahren unter Umständen Probleme dahingehend gegeben, dass Pulver, welches nicht zur Bildung des herzustellenden Bauteils verwendet worden ist, in Hohlräumen verbleibt und nicht mehr in einfacher und ausreichender Weise entfernt werden kann.

### OFFENBARUNG DER ERFINDUNG

### AUFGABE DER ERFINDUNG

Es ist deshalb Aufgabe der vorliegenden Erfindung, ein Verfahren zur generativen Herstellung eines dreidimensionalen Körpers bereitzustellen, welches eine hohe Flexibilität aufweist, sodass beliebige Formen herstellbar sind und die im Stand der Technik bestehenden Probleme vermieden werden. Gleichzeitig soll ein entsprechendes Verfahren einfach durchführbar und eine hierfür geeignete Vorrichtung einfach aufgebaut sein.

### TECHNISCHE LÖSUNG

Diese Aufgabe wird gelöst durch ein Verfahren mit den Merkmalen des Anspruchs 1 und eine Vorrichtung mit den Merkmalen des Anspruchs 9. Vorteilhafte Ausgestaltungen sind Gegenstand der abhängigen Ansprüche.

Die vorliegende Erfindung macht sich zunutze, dass Pulver, wie es zur generativen Herstellung von Bauteilen Verwendung findet, elektrostatisch auf entsprechende Körper aufgebracht werden kann, sodass das Pulver in jeder beliebigen Lage des Körpers an dem Körper haftet. Dadurch ist es möglich, ein generatives Herstellungsverfahren auf der Basis der selektiven Verbindung von Pulverpartikeln zu verwirklichen, ohne dass die Pulveraufbringung bzw. Pulverbereitstellung auf die lagenweise Anordnung des Pulvers in einem Pulverbett beschränkt wäre. Vielmehr ist es möglich, das Pulver durch die elektrostatische Aufbringung auf einem Substrat und/oder einem Teilkörper des herzustellenden Körpers in beliebiger Weise anzuordnen und den Körper ebenfalls in beliebiger Ausrichtung oder Anordnung bereit zu stellen, sodass ein sehr flexibles Herstellungsverfahren bereitgestellt werden kann.

Entsprechend wird gemäß der Erfindung auf einem Substrat und/oder einem ersten, bereits existierenden Teilkörper des herzustellenden Körpers Pulver elektrostatisch aufgebracht und dann mittels Strahlungsenergie geschmolzen und/oder gesintert, und zwar so, dass eine Teilschicht des zu bildenden Körpers gemäß einem Schnitt durch den herzustellenden Körper erzeugt wird.

Um eine sichere elektrostatische Haftung zu bewirken, kann das Pulver entsprechend elektrisch aufgeladen werden, und zwar mittels Hochspannung (Corona-Aufladung oder Ionisation), durch Reibung oder durch elektrokinetische Aufladung.

Der bereits existierende Teilkörper und/oder das Substrat, auf dem das Pulver aufgebracht werden soll, können mit einem elektrischen Potential beaufschlagt werden, sodass das Pulver, insbesondere das elektrisch aufgeladene Pulver an dem Teilkörper und/oder dem Substrat elektrostatisch anhaftet. Dabei kann die Potentialverteilung an dem Teilkörper und/oder dem Substrat so gewählt werden, dass vorwiegend oder nur in den Bereichen eine Anhaftung des Pulvers erfolgt, die bei der Erzeugung der nächsten Teilschicht des herzustellenden Körpers erforderlich sind.

Als Strahlungsenergie, die zum Aufschmelzen und/oder Sintern der Pulverpartikel zur Erzeugung einer stoffschlüssigen Verbindung der Pulverpartikel mit dem Teilkörper und/oder untereinander genutzt wird, können Laserstrahlen oder Elektronenstrahlen Verwendung finden.

Zusätzlich oder alternativ zu der ortsabhängigen Aufbringung und/oder Verteilung des Pulvers auf dem Teilkörper und/oder dem Substrat, kann auch die Strahlungsenergie selektiv eingebracht werden, um die Pulverpartikel mit dem Teilkörper und/oder untereinander so zu verbinden, wie es der nächsten herzustellenden Teilschicht des gewünschten Körpers entspricht.

Sofern ein Teilkörper und/oder ein Substrat verwendet wird, welche keine oder eine ungenügende Haftung der Pulverpartikel ermöglichen, kann auf dem Teilkörper und/oder dem Substrat eine Grundschicht aufgebracht werden, die die elektrostatische Abscheidung des Pulvers ermöglicht.

Darüber hinaus kann auf einem Substrat, welches nicht Teil des herzustellenden Körpers sein soll, eine Beschichtung aufgebracht werden, die ein einfaches Ablösen des fertig hergestellten Körpers ermöglicht.

Eine erfindungsgemäße Vorrichtung zur Durchführung eines entsprechenden Verfahrens weist somit neben einer Halterung zur Aufnahme eines bereits erzeugten Teilkörpers und/oder eines Substrats sowohl Strahlungsmittel zur Erzeugung hochenergetischer Strahlung zum Aufschmelzen und/oder Sintern der Pulverpartikel als auch eine Vorrichtung zur Beaufschlagung des Teilkörpers und/oder des Substrats mit einem elektrischen Potential auf.

Darüber hinaus kann eine entsprechende Vorrichtung weiterhin eine Aufladungsstation zum elektrischen Aufladen der Pulverpartikel aufweisen. Zusätzlich können Vorrichtungen zum Pulverauftrag auf den Teilkörper und/oder das Substrat vorgesehen sein, wie beispielsweise entsprechende Sprühvorrichtungen oder dergleichen.

### KURZBESCHREIBUNG DER FIGUREN

Die beigefügten Zeichnungen zeigen in rein schematischer Weise in
Fig. 1 ein Beispiel für eine erste Ausführungsform der vorliegenden Erfindung; und in
Fig. 2 eine Darstellung eines Beispiels einer zweiten Ausführungsform der vorliegenden Erfindung.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen deutlich werden. Allerdings ist die Erfindung nicht auf diese Ausführungsbeispiele beschränkt.

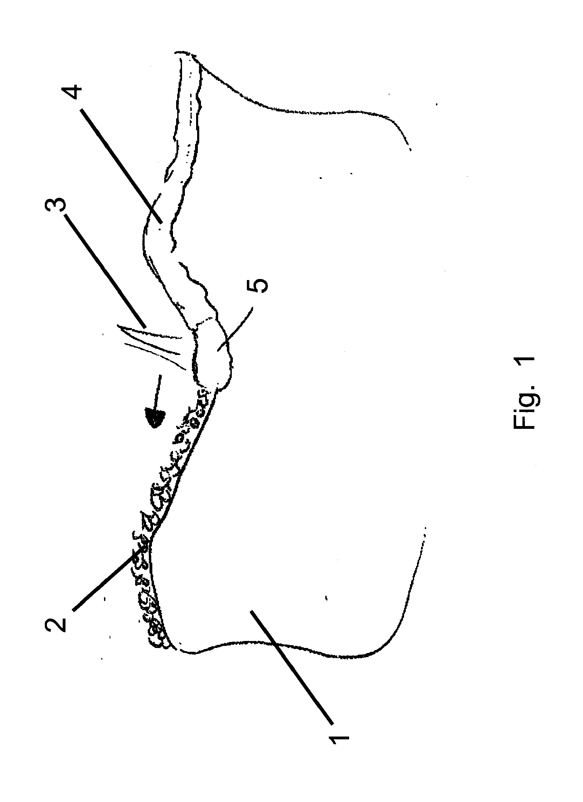

Die Figur 1 zeigt einen Querschnitt durch einen Teilkörper 1 eines herzustellenden Körpers, auf dem gemäß der Erfindung eine Pulverschicht 2 elektrostatisch abgeschieden worden ist, um einen dreidimensionalen Körper zu erzeugen. Der Teilkörper 1 kann beispielsweise aus einem metallischen Werkstoff, wie einer Nickelbasislegierung, gebildet sein und bereits selbst generativ hergestellt sein oder durch ein anderes Herstellverfahren bereitgestellt werden. Um aus dem Teilkörper 1 den gewünschten dreidimensionalen Körper herzustellen, wird die Pulverschicht 2 mittels eines Lasers mit Strahlungsenergie in Form von Laserstrahlen 3 beaufschlagt, sodass die Pulverpartikel der Pulverschicht 2 aufschmelzen und einen Schmelzbereich 5 bilden und/oder sintern. Hierdurch kommt es zu einer Verbindung zwischen den Pulverpartikeln in der Pulverschicht 2 und mit dem Teilkörper 1, sodass sich eine feste, stoffflüssige Verbindung innerhalb der Pulverschicht 2 und zwischen dem Pulver der Pulverschicht 2 und dem Teilkörper 1 ergibt. Die entsprechend ausgebildete Schicht ist in Figur 1 mit dem Bezugszeichen 4 verzeichnet.

Die aufgebrachte Schicht 4 weist eine Kontur auf, die einem Schnitt durch den herzustellenden Körper entspricht und somit eine Teilschicht des herzustellenden Körpers darstellt. Dies kann dadurch verwirklicht werden, dass durch die elektrische Potentialverteilung an dem Teilkörper 1 nur an denjenigen Stellen Pulver aufgebracht wird, an denen die erzeugte Schicht 4 entstehen soll. Alternativ oder zusätzlich kann auch der Laserstrahl 3 lediglich in den Bereichen über die Pulverschicht 2 verfahren werden, in denen eine Teilschicht des herzustellenden Körpers erzeugt werden soll. Entsprechend ist die Bewegungsrichtung der Laserstrahlen 3 in Fig. 1 mit einem Pfeil dargestellt. Auf diese Weise lässt sich jede beliebige dreidimensionale Struktur erzeugen, wobei durch die elektrostatische Haftung des Pulvers 2 an dem Teilkörper 1 eine beliebige Lagerung und Orientierung bzw. Ausrichtung des Teilkörpers 1 möglich ist, da das Pulver durch die elektrostatische Haftung sicher mit dem Teilkörper 1 verbunden ist. Entsprechend können beliebige dreidimensionale Formen in einfacher Weise hergestellt werden. Darüber hinaus können im Gegensatz zu Verfahren, die eine generative Herstellung der Bauteile im Pulverbett durchführen, auch solche Formen erzeugt werden, die aufgrund der Kontur im Pulverbett schwierig oder gar nicht herzustellen sind oder die Probleme mit der Entfernung von losem Pulver erzeugen.

Bei dem Ausführungsbeispiel der Figur 1 ist der Teilkörper 1 ein Teil des herzustellenden Körpers, der auch nach der Fertigung in dem Körper verbleibt, wobei der Teilkörper 1 entweder bereits selbst generativ durch das gleiche oder ein anderes Verfahren hergestellt worden sein kann oder durch jede andere beliebige Komponente gebildet sein kann. Beispielsweise ließe sich der Teilkörper 1 zunächst durch ein Zusammenfügen der Pulverpartikel in einem Pulverbett erzeugen, bis der Teilkörper 1 eine ausreichende Größe als Basis für das erfindungsgemäße Verfahren aufweist.

Die Pulverpartikel der Pulverschicht 2 können somit aus dem gleichen Werkstoff wie der Teilkörper 1 gebildet sein oder durch einen anderen Werkstoff.

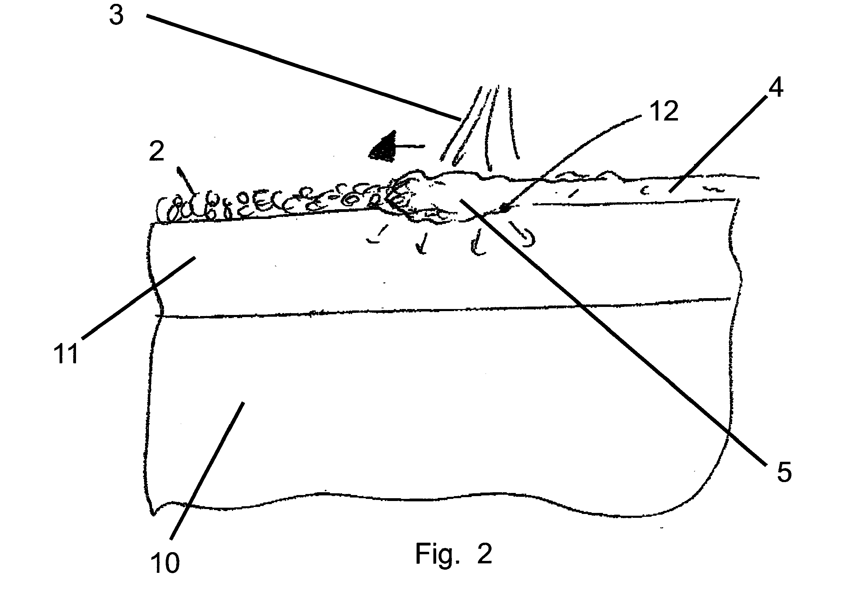

Bei der Ausführungsform der Figur 2 erfolgt wiederum eine elektrostatische Aufbringung des Pulvers in einer Pulverschicht 2 sowie ein Fügen der Pulverpartikel untereinander durch Einbringung von Energie mittels Strahlungsenergie, z.B. in Form eines Lasers 3, sodass sich wiederum eine abgeschiedene Teilschicht 4 ausbildet, wie dies auch zur Fig. 1 beschrieben wurde. Entsprechend werden identische Komponenten mit identischen Bezugszeichen oder gleiche Vorgehensweisen nicht noch einmal beschrieben, sondern es wird auf die Beschreibung der Ausführungsform der Fig. 1 verwiesen.

Im Unterschied zur Ausführungsform der Fig. 1 wird bei der Ausführungsform der Figur 2 als Basis für die zu erzeugende Schicht jedoch kein Teilkörper verwendet, der im herzustellenden Körper verbleibt, sondern es wird ein Substrat 10, z.B. aus einem Kunststoff, verwendet, welches nach der Herstellung des herzustellenden Körpers wieder entfernt wird. Das Substrat 10 weist zusätzlich eine Beschichtung 11 auf, auf der die Pulverabscheidung erfolgt. Die Beschichtung kann aus einem metallischen Werkstoff wie Kupfer gebildet sein, um eine elektrostatische Aufbringung des Pulvers zu ermöglichen und/oder eine Grundfläche für die zu erzeugende Schicht 4 bereitzustellen, die es ermöglicht, den entsprechend erzeugten Körper in einfacher Weise von der Grundfläche, also der Beschichtung 11 zu entfernen, ohne dass es zwischen der erzeugten Schicht 4 und der Beschichtung 11 zu einer innigen Verbindung kommt.

Allerdings ist es auch möglich, auf einem Teilkörper eine Beschichtung vorzusehen, wenn beispielsweise Werkstoffverbunde durch das erfindungsgemäße Verfahren erzeugt werden sollen und der Werkstoff eines Teilkörpers nicht für die elektrostatische Aufbringung des Pulvers geeignet ist.

Bei der in Fig. 2 dargestellten Ausführungsform dient die Beschichtung auch dazu, zu vermeiden, dass eine oder eine zu starke Verbindung zwischen dem herzustellenden Körper und dem Substrat erzeugt wird. Bei der Ausführungsform der Fig. 2 kommt es unter anderem auch deshalb nicht zu der Ausbildung einer innigen Verbindung zwischen der erzeugten Schicht 4 und der Beschichtung 11, da die Beschichtung eine hohe Wärmeleitfähigkeit aufweist und die von dem Laserstrahl 3 eingebrachte Wärme sehr schnell abgeführt wird, sodass die Beschichtung nicht die notwendige Temperatur zum Aufschmelzen bzw. Sintern mit den Pulverpartikeln der Pulverschicht 2 erreicht. Damit lässt sich nach der Herstellung des gewünschten Körpers dieser in einfacher Weise von dem Substrat 10 und der darauf angeordneten Beschichtung 11 entfernen.

Obwohl die vorliegende Erfindung anhand der Ausführungsbeispiele detailliert beschrieben worden ist, ist die Erfindung nicht auf diese Ausführungsbeispiele beschränkt, sondern es ist vielmehr möglich, dass Abwandlungen vorgenommen werden, indem einzelne Merkmale weggelassen werden oder andersartige Kombinationen von Merkmalen verwirklicht werden, ohne dass der Schutzbereich der beigefügten Ansprüche verlassen wird. Die vorliegende Erfindung offenbart sämtliche Kombinationen aller vorgestellter Einzelmerkmale.

## Patentansprüche

1. Verfahren zur generativen Herstellung eines dreidimensionalen Körpers, der aus Pulver aufgebaut wird, wobei zunächst ein Substrat (10) und/oder ein bereits existierender Teilkörper (1) des herzustellenden Körpers bereitgestellt wird und wobei zur Herstellung einer dreidimensionalen Geometrie jeweils einzelne Pulverschichten (2) entlang und gemäß der Kontur eines Schnitts durch den herzustellenden Körper auf dem Substrat und/oder dem Teilkörper aufgebracht werden und wobei die Pulverschichten jeweils zumindest teilweise mit dem bereits existierenden Teilkörper verbunden werden und/oder das Pulver innerhalb der Pulverschichten untereinander gefügt wird, indem die Pulverschichten durch Strahlungsenergie (3) aufgeschmolzen und/oder gesintert werden,
**dadurch gekennzeichnet, dass**
das Pulver elektrostatisch auf den Teilkörper und/oder das Substrat aufgebracht wird.

2. Verfahren nach Anspruch 1,
**dadurch gekennzeichnet, dass**
das Pulver elektrisch aufgeladen wird.

3. Verfahren nach Anspruch 1 oder 2,
**dadurch gekennzeichnet, dass**
der Teilkörper (1) und/oder das Substrat (10) mit einem elektrischen Potential beaufschlagt werden, so dass das elektrisch aufgeladene Pulver an dem Teilkörper und/oder dem Substrat elektrostatisch anhaftet.

4. Verfahren nach Anspruch 3,
**dadurch gekennzeichnet, dass**
das elektrische Potential in Abhängigkeit von der Kontur des herzustellenden Körpers eingestellt wird, so dass das Pulver so an dem Teilkörper und/oder Substrat haftet, wie es der nächsten herzustellenden Teilschicht des Körpers entspricht.

5. Verfahren nach einem der vorhergehenden Ansprüche,
**dadurch gekennzeichnet, dass**
die einzelnen Pulverpartikel durch das Aufschmelzen und/oder Sintern stoffschlüssig mit dem Teilkörper (1) und/oder untereinander verbunden werden.

6. Verfahren nach einem der vorhergehenden Ansprüche,
**dadurch gekennzeichnet, dass**
als Strahlungsenergie (3) Laserstrahlen oder Elektronenstrahlen eingesetzt werden.

7. Verfahren nach einem der vorhergehenden Ansprüche,
**dadurch gekennzeichnet, dass**
die Strahlungsenergie (3) in Abhängigkeit von der Kontur des herzustellenden Körpers eingestrahlt wird, so dass das Pulver so an dem Teilkörper und/oder dem Substrat aufschmilzt und/oder sintert, wie es der nächsten herzustellenden Teilschicht des Körpers entspricht.

8. Verfahren nach einem der vorhergehenden Ansprüche,
**dadurch gekennzeichnet, dass**
auf dem Teilkörper und/oder Substrat eine Grundschicht (11) aufgebracht wird, die die elektrostatische Abscheidung des Pulvers ermöglicht

9. Vorrichtung zur generativen Herstellung eines dreidimensionalen Körpers, der aus Pulver aufgebaut wird, insbesondere nach einem Verfahren nach einem der vorhergehenden Ansprüche, wobei die Vorrichtung eine Halterung zur Aufnahme eines bereits erzeugten Teilkörpers des zu erzeugenden Körpers und/oder eines Substrats und Strahlungsmittel zur Erzeugung hochenergetischer Strahlung (3) zum Aufschmelzen und/oder Sintern von Pulver umfasst,
**dadurch gekennzeichnet, dass**
die Vorrichtung weiterhin eine Vorrichtung zur Beaufschlagung des Teilkörpers (1) und/oder des Substrats (10) mit einem elektrischen Potential umfasst.

10. Vorrichtung nach Anspruch 9,
**dadurch gekennzeichnet, dass**
die Vorrichtung weiterhin eine Aufladungsstation zum elektrischen Aufladen von Pulver aufweist.

11. Vorrichtung nach Anspruch 9 oder 10,
**dadurch gekennzeichnet, dass**
die Vorrichtung weiterhin eine Pulverauftragsstation umfasst
